# EUROPÄISCHE PATENTSCHRIFT

(11) **EP 2 133 724 B1**
(45) Veröffentlichungstag und Bekanntmachung des Hinweises auf die Patenterteilung: **01.02.2017**
(21) Anmeldenummer: 09007373.5
(22) Anmeldetag: 04.06.2009
(51) Int. Cl.: G02B 13/14

(54) **Apochromatisches Objektiv**
Apochromatic lens
Objectif apochromatique

(30) Priorität: 09.06.2008 DE 102008027414
(43) Veröffentlichungstag der Anmeldung: 16.12.2009
(73) Patentinhaber: Astrium GmbH, 82024 Taufkirchen (DE)
(72) Erfinder: Holota, Wolfgang, 83464 Bad Tölz (DE); Mathe, Gerald, 81543 München (DE)
(74) Vertreter: Schicker, Silvia

(56) Entgegenhaltungen:
- EP-A2- 1 006 373
- US-A- 4 955 701
- US-A- 5 305 138
- US-A- 5 547 457
- US-B1- 7 271 965

## Beschreibung

### TECHNISCHES GEBIET

Die vorliegende Erfindung betrifft ein apochromatisches Objektiv, das für einen Wellenlängenbereich von 400 nm bis 1.000 nm apochromatisch korrigiert ist, gemäß dem Oberbegriff des Patentanspruchs 1. Die Erfindung betrifft insbesondere ein apochromatisches Objektiv, das für den Einsatz in der Fotogrammetrie im Weltraum und/oder auf der Erde geeignet ist.

In Umgebungen mit hoher Strahlenbelastung, beispielsweise kurzwelliger elektromagnetischer Strahlung oder Teilchenstrahlung (zum Beispiel Elektronen, Neutronen oder Ionen) kommt es häufig zu einer Degradation der für die Linsen verwendeten optischen Gläser. Diese Degradation hat eine Verringerung der Transmission der betroffenen Linsen zur Folge.

Des Weiteren wird sowohl für den Einsatz im Weltraum, als auch für den terrestrischen Einsatz eine hohe Abbildungsgenauigkeit über einen großen Wellenlängenbereich gefordert. Insbesondere ist die chromatische Aberration über einen großen Wellenlängenbereich zu minimieren.

### STAND DER TECHNIK

Herkömmliche Objektive, beispielsweise für Großformatkameras, verwenden keine strahlungsresistenten optischen Materialien und sind nicht über einen großen Wellenlängenbereich apochromatisch korrigiert, insbesondere nicht für den in der Fotogrammetrie angestrebten Wellenlängenbereich von 400 nm bis 1.000 nm. Dasselbe trifft auch zu für Objektive, die herkömmlicherweise für fotogrammetrische Anwendungen eingesetzt werden. Marktübliche Fotoobjektive stellen zudem keinen für fotogrammetrische Anwendungen ausreichend großen Bildkreis zur Verfügung. Es sind zwar Optiken aus strahlungsresistenten Materialien bekannt, beispielsweise Belichtungsoptiken für Halbleiter-Lithographie. Diese Optiken sind aber nur in einem sehr schmalen Wellenlängenbereich chromatisch korrigiert. Optische Konstruktionen auf der Basis von Spiegeln weisen zwar keine chromatische Aberration auf und sind auch für Umgebungen mit hoher Strahlenbelastung geeignet, jedoch ist mit diesen Spiegelkonstruktionen nur ein sehr begrenzter Bildkreis realisierbar.

Die US 5,305,138 A zeigt ein Objektiv, das für UV-Strahlung und sichtbares Licht vorgesehen ist. Dieses Objektiv weist eine apochromatische Korrektur für drei Wellenlängen im sichtbaren Spektrum auf. Die Werkstoffe, aus denen die einzelnen Linsen gebildet sind, sind CaF₂, SiO₂ und BaF₂.

Die US 5,547,457 A betrifft ein Objektiv für Endoskope mit einer Mehrzahl von Linsen und einer Blende. Dort wird unter anderem ausgeführt, dass in Fällen, in denen Endoskope beispielsweise für Untersuchungen in Kernreaktoren eingesetzt werden sollen, und dort Röntgenstrahlung oder Gammastrahlung ausgesetzt sind, Ceriumoxid dem Glasmaterial als Schutz gegen diese Strahlung beigefügt werden kann. Allerdings wird auch darauf hingewiesen, dass die Verwendung von Ceriumoxid zu einer gelblichen Verfärbung des Glases führt. Um eine Farbverfälschung zu vermeiden, soll darauf geachtet werden, dass die mit Ceriumoxid versehenen Objektivkomponenten so dünn wie möglich ausgebildet werden sollen.

Die EP 1 006 373 A2 betrifft ein Objektiv mit Kristall-Linsen für eine Projektionsbelichtungsanlage der Mikrolitographie.

### DARSTELLUNG DER ERFINDUNG

Aufgabe der vorliegenden Erfindung ist es, ein apochromatisches Objektiv anzugeben, das bei einem großen Bildkreis nahezu verzeichnungsfrei arbeitet, das breitbandig apochromatisch korrigiert und für den Einsatz in großen Höhen sowie im Weltraum geeignet ist.

Diese Aufgabe wird gelöst durch ein apochromatisches Objektiv mit den Merkmalen des Anspruchs 1.

Dazu ist das apochromatische Objektiv versehen mit einer Blende und ausschließlich refraktiven optischen Elementen, umfassend eine Mehrzahl von in Linsengruppen entlang einer optischen Achse angeordneten Linsen, wobei Linsen unterschiedlicher Materialien vorgesehen sind und wobei die Linsen jeweils aus einem der nachfolgend aufgeführten Materialien bestehen: Kalziumfluorid (CaF₂), synthetischer Quarz (SiO₂) oder anderes gegen kurzwellige elektromagnetische Strahlung oder Teilchenstrahlung strahlungsresistentes optisches Material.Es besteht zumindest eine der Linsen aus einem anderen strahlungsresistenten optischen Material, als CaF₂ oder SiO₂. Erfindungsgemäß weist dieses andere strahlungsresistente optische Material Ceroxid (CeO₂) als einen seiner Bestandteile auf.

### VORTEILE

Das Vorsehen eines apochromatischen Objektivs, das für einen Wellenlängenbereich von 400 nm bis 1.000 nm apochromatisch korrigiert ist, und bei welchem zumindest eine der Linsen aus einem gegen kurzwellige elektromagnetische Strahlung oder Teilchenstrahlung resistenten optischen Material besteht, welches als Bestandteil Ceroxid (CeO₂) aufweist, sorgt mit der im Oberbegriff des Anspruchs 1 angegebenen Materialwahl für die Linsen dafür, dass das gesamte Objektiv der beim Einsatz in großen Höhen und im Weltraum einwirkenden Höhenstrahlung bzw. Weltraumstrahlung gegenüber resistent ist. Dadurch wird die bei konventionellen optischen Gläsern unter der Einwirkung von Höhenstrahlung oder Weltraumstrahlung auftretende Degradation der optischen Gläser, die sich in einer Verringerung der Transmission äußert, vermieden. Gleichzeitig wird durch den erfindungsgemäßen Aufbau des apochromatischen Objektivs und durch die im Anspruch angegebene Materialauswahl eine hohe spektrale Transmission erzielt.

Durch die Wahl ausschließlich refraktiver optischer Elemente und die besondere Materialauswahl wird die gewünschte hohe Leistungsfähigkeit des Objektivs erreicht. Das Objektiv ist für einen Wellenlängenbereich von 400 nm bis 1.000 nm apochromatisch korrigiert. Dabei ist der polychromatische Kontrast bei einer Ortsfrequenz von 100 lp/mm (Linienpaare pro Millimeter) 0,2 oder besser und bei einer Ortsfrequenz von 60 Ip/mm ist der polychromatische Kontrast 0,4 oder besser. Diese Kontrastleistungen werden über den gesamten Wellenlängenbereich von 400 nm bis 1.000 nm erreicht. Zudem erreicht das Objektiv gemäß der vorliegenden Erfindung diese Kontrastleistungen über den gesamten Wellenlängenbereich von 400 nm bis 1.000 nm innerhalb eines Feldwinkelbereichs von - 20° bis + 20°.

Weiterhin ist das erfindungsgemäße Objektiv strahlungsresistent und kann somit sowohl unter Weltraumbedingungen, als auch unter terrestrischen Bedingungen eingesetzt werden.

Weitere bevorzugte und vorteilhafte Ausgestaltungsmerkmale des erfindungsgemäßen apochromatischen Objektivs sind Gegenstand der Unteransprüche.

Dabei ist es vorteilhaft, wenn Linsen aus zwei der in Anspruch 1 genannten Materialien vorgesehen sind.

Alternativ ist es auch vorteilhaft, wenn Linsen aus drei der in Anspruch 1 genannten Materialien vorgesehen sind.

Der Gehalt von CeO₂ beträgt vorzugsweise mindestens 0,5 Gewichtsprozent. Besonders bevorzugt wird ein Gehalt von CeO₂ im Bereich von 1,8 bis 2,0 Gewichtsprozent.

Vorzugsweise ist die Blende zwischen der ersten Linsengruppe und der zweiten Linsengruppe vorgesehen.

In einer besonders bevorzugten Ausführungsform weisen zumindest zwei Linsen jeweils eine asphärische Oberfläche auf.

Bevorzugt ist dabei, wenn drei Linsen jeweils eine asphärische Oberfläche aufweisen.

Zumindest eine asphärische Oberfläche ist bevorzugterweise in Richtung der optischen Achse vor der Blende und zumindest eine asphärische Oberfläche ist bevorzugterweise in Richtung der optischen Achse hinter der Blende vorgesehen, so dass auf beiden Seiten der Blende zumindest eine asphärische Oberfläche gelegen ist.

In einer bevorzugten Ausgestaltung ist eine der Linsenoberflächen der Linsen der zweiten Linsengruppe asphärisch ausgebildet.

Dabei ist es vorteilhaft, wenn eine der Linsenoberflächen der zur Gegenstandebene weisenden Linse in der ersten Linsengruppe asphärisch ausgebildet ist.

Alternativ oder zusätzlich kann eine der Linsenoberflächen der zur Bildebene weisenden Linse in der dritten Linsengruppe asphärisch ausgebildet sein.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:

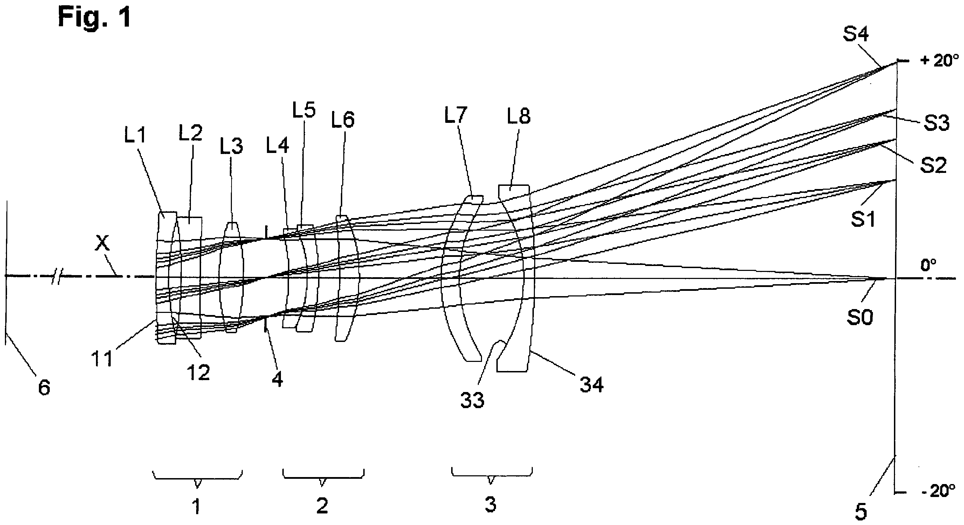

- Fig. 1: ein schematisches Beispiel des Aufbaus eines erfindungsgemäßen apochromatischen Objektivs.

### DARSTELLUNG VON BEVORZUGTEN AUSFÜHRUNGSBEISPIELEN

Fig. 1 ist eine schematische Darstellung des Aufbaus eines erfindungsgemäßen apochromatischen Objektivs. Das Objektiv umfasst drei Linsengruppen 1, 2, 3, die auf einer optischen Achse X hintereinander und mit Abstand zueinander angeordnet sind und auf dem Fachmann bekannte Weise in einem (nicht gezeigten) Objektivgehäuse befestigt sind. Zwischen der ersten Linsengruppe 1 und der zweiten Linsengruppe 2 ist eine Blende 4 vorgesehen, die in Fig. 1 schematisch durch zwei vertikale Striche dargestellt ist.

Die erste Linsengruppe 1 besteht aus drei entlang der optischen Achse X hintereinander angeordneten Linsen L1, L2, L3. Die zweiten Linsengruppe 2 umfasst ebenfalls drei Linsen L4, L5, L6. Die dritte Linsengruppe 3 umfasst zwei Linsen L7, L8. Rechts von der dritten Linsengruppe 3 ist schematisch eine Bildebene 5 dargestellt. Links von der ersten Linsengruppe 1 ist schematisch eine weit entfernt gelegene Gegenstandsebene 6 dargestellt.

Die zur Gegenstandsebene 6 weisende erste Linse L1 der ersten Linsengruppe 1 besitzt eine negative Brechkraft und besteht aus synthetischem Quarz (SiO₂) oder einem anderen strahlungsresistenten optischen Material (SR) mit Ausnahme von Kalziumfluorid (CaF₂).

Die zweite Linse L2 der ersten Linsengruppe 1 besitzt ebenfalls eine negative Brechkraft und besteht aus synthetischem Quarz (SiO₂) oder einem anderen strahlungsresistenten optischen Material (SR) mit Ausnahme von Kalziumfluorid (CaF₂). Die Materialien, aus denen die erste Linse L1 und die zweite Linse L2 der ersten Linsengruppe 1 hergestellt sind, sind unterschiedlich.

Die dritte, der Blende 4 nächstgelegene Linse L3 der ersten Linsengruppe 1 besitzt eine positive Brechkraft und besteht aus Kalziumfluorid (CaF₂).

Ein geeignetes optisches Glas aus synthetischem Quarz (SiO₂) ist beispielsweise von der Firma Schott unter der Produktbezeichnung "LITHOSIL-Q" erhältlich. Ein geeignetes optisches Glas aus Kalziumfluorid (CaF₂) ist beispielsweise von der Firma Schott unter der Produktbezeichnung "LITHOTEC-CAF2" erhältlich. Ein geeignetes anderes strahlungsresistentes optisches Material (SR) ist beispielsweise optisches Glas mit einer Beimengung von mindestens 0,5 Gewichtsprozent Ceroxid (CeO₂). Als "strahlungsresistent" werden in diesem Zusammenhang optische Materialien bezeichnet, deren Transmissionseigenschaft sich unter der Einwirkung von hoher Strahlenbelastung, beispielsweise kurzwelliger elektromagnetischer Strahlung oder Teilchenstrahlung (zum Beispiel Elektronen, Neutronen oder lonen)nicht wesentlich verändert. Beispiele für derartige andere strahlungsresistente optische Materialien sind beispielsweise von der Firma Schott unter der Produktbezeichnung "BK7G18" oder "K5G20" erhältliche optische Gläser.

Die zweite Linsengruppe 2, die die der Blende 4 nächstgelegene Linse L4 sowie zwei weitere Linsen L5 und L6 umfasst, enthält eine Linsenoberfläche, die asphärisch ausgebildet ist. Die restlichen Linsenoberflächen der zweiten Gruppe 2 sind sphärisch ausgebildet. Diese asphärische Ausgestaltung einer der Linsenoberflächen in der zweiten Linsengruppe 2 dient dazu, die sphärische Aberration zu korrigieren. Die besondere Lage dieser zweiten Linsengruppe 2 in der Nähe zur Blende 4 erlaubt die Korrektur des chromatischen Längsfehlers.

Auf der in Richtung entlang der optischen Achse X von der Blende 4 abgewandten Seite der zweiten Linsengruppe 2 ist mit Abstand zu dieser die dritte Linsengruppe 3 mit den Linsen L7 und L8 vorgesehen. Die Linse L8 ist dabei die Linse, die am nächsten zur Bildebene 5 gelegen ist. Sowohl die Linse L7, als auch die Linse L8 besteht aus Kalziumfluorid (CaF₂), synthetischem Quarz (SiO₂) oder einem anderen strahlungsresistenten optischen Material (SR). Die Materialien, aus denen die Linsen L7 und L8 gebildet sind, sind jedoch unterschiedlich.

Das in Fig. 1 dargestellte apochromatische Objektiv kann in zwei unterschiedlichen Konstruktionen realisiert sein. Eine erste Konstruktion, die besonders für den Einsatz im Weltraum geeignet ist und als Weltraumversion bezeichnet wird, ist besonders leicht ausgeführt und kann eine Masse von weniger als einem Kilogramm aufweisen. Diese Konstruktionsvariante weist drei asphärische Linsenoberflächen auf. Es ist dabei entweder die zur Gegenstandsebene 6 hin weisende vordere Linsenoberfläche 11 oder die von der Gegenstandsebene 6 weg weisende rückwärtige Linsenoberfläche 12 der ersten Linse L1 asphärisch ausgebildet. Der Rest der Linsenoberflächen der Linsen L1, L2 und L3 in der ersten Linsengruppe 1 ist sphärisch ausgebildet.

Weiterhin ist, wie oben bereits ausgeführt worden ist, eine der Linsenoberflächen in der Linsengruppe 2 asphärisch ausgebildet. Der Rest der Linsenoberflächen der Linsen L4, L5 und L6 in der zweiten Linsengruppe 2 ist sphärisch ausgebildet. Schließlich ist für die weltraumgeeignete erste Konstruktionsvariante noch entweder die zur Bildebene 5 hin weisende rückwärtige Linsenoberfläche 34 oder die von der Bildebene weg weisende vordere Linsenoberfläche 33 der achten Linse L8 in der dritten Linsengruppe 3 asphärisch ausgebildet. Der Rest der Linsenoberflächen der Linsen L7 und L8 in der dritten Linsengruppe 3 ist spärisch ausgebildet.

In einer zweiten, alternativen Konstruktionsvariante ist das apochromatische Objektiv für den terrestrische Einsatz vorgesehen (terrestrische Version). Es unterliegt dabei nicht den restriktiven Massebeschränkungen, die für den Weltraumeinsatz erforderlich sind. Die terrestrische Konstruktionsvariante kann daher mit größeren Linsen und somit größerem Gewicht ausgelegt werden, so dass es hier ausreichend ist, nur zwei asphärische Linsenoberflächen vorzusehen.

In dieser terrestrischen Variante mit nur zwei asphärischen Linsenoberflächen kann gegenüber der Weltraumversion die asphärische Gestaltung der Linsenoberfläche der Linse L1 oder die asphärische Gestaltung der Linsenoberfläche der Linse L8 entfallen und die betreffende Linsenoberfläche kann ebenfalls sphärisch ausgebildet sein. In diesem Fall sind somit nur die asphärische Linsenoberfläche in der zweiten Linsengruppe 2 sowie entweder die asphärische Gestaltung der vorderen Linsenoberfläche 11 oder der rückwärtigen Linsenoberfläche 12 der ersten Linse L1 oder die asphärische Gestaltung der vorderen Linsenoberfläche 33 oder der rückwärtigen Linsenoberfläche 34 der Linse L8 vorgesehen.

Die asphärischen Flächen auf den Linsen L1 und/oder L8 korrigieren die chromatischen Querabweichungen und die Verzeichnung über das gesamte Bildfeld und führen somit zu einer Quasi-Verzeichnungsfreiheit. Dieser Begriff "Quasi-Verzeichnungsfreiheit" ist im Rahmen der vorliegenden Erfindung so zu interpretieren, dass die innerhalb eines Bildfeldes mit einem Feldwinkel von + 20° bis - 20° maximal auftretende Verzeichnung betragsmäßig kleiner ist als 0,02 %. Dies ist in Fig. 1 durch die fünf Strahlenbündel S0, S1, S2, S3 und S4 dargestellt, wobei das Strahlenbündel S0 den Achsstrahl bei einem Feldwinkel von 0° darstellt und das Strahlenbündel S4 den am weitesten ausgelenkten Strahl bei einem Feldwinkel von + 20° darstellt.

Der in Fig. 1 gezeigte Aufbau des apochromatischen Objektivs in Verbindung mit dem Vorsehen der asphärischen Flächen gemäß der Weltraumversion beziehungsweise gemäß der terrestrischen Version bewirkt die gewünschte breitbandige apochromatische Korrektur in einem Wellenlängenbereich von 400nm bis 1.000 nm.

Das erfindungsgemäße apochromatische Objektiv ist aufgrund seiner hohen Verzeichnungsfreiheit auch in Verbindung mit sogenannten TDI-Detektoren ("time delayed integration") nutzbar.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: Linsengruppe
- 2: Linsengruppe
- 3: Linsengruppe
- 4: Blende
- 5: Bildebene
- 6: Gegenstandsebene
- 11: vordere Linsenoberfläche
- 12: rückwärtige Linsenoberfläche
- 33: vordere Linsenoberfläche
- 34: rückwärtige Linsenoberfläche
- L1: Linse
- L2: Linse
- L3: Linse
- L4: Linse
- L5: Linse
- L6: Linse
- L7: Linse
- L8: Linse
- X: Achse

## Patentansprüche

1. Apochromatisches Objektiv, mit
- einer Blende (4) und
- ausschließlich refraktiven optischen Elementen, umfassend eine Mehrzahl von in Linsengruppen (1, 2, 3) entlang einer optischen Achse (X) angeordneten Linsen (L1, L2, L3, L4, L5, L6, L7, L8),
- wobei Linsen unterschiedlicher Materialien vorgesehen sind und
- wobei die Linsen (L1, L2, L3, L4, L5, L6, L7, L8) jeweils aus einem der nachfolgend aufgeführten Materialien bestehen:
· Kalziumfluorid (CaF₂),
· synthetischer Quarz (SiO₂) oder
· anderes gegen kurzwellige elektromagnetische Strahlung oder
· Teilchenstrahlung resistentes optisches Material (SR),
- wobei zumindest eine der Linsen (L1, L2, L3, L4, L5, L6, L7, L8) aus einem anderen strahlungsresistenten optischen Material (SR), als CaF₂ oder SiO₂ besteht
**dadurch gekennzeichnet,**
**dass** das Objektiv für einen Wellenlängenbereich von 400nm bis 1000nm apochromatisch korrigiert ist, und
**dass** das andere strahlungsresistente optische Material (SR) als Bestandteil Ceroxid (CeO₂) aufweist.

2. Apochromatisches Objektiv nach Anspruch 1,
**dadurch gekennzeichnet,**
**dass** Linsen aus zwei der in Anspruch 1 genannten Materialien vorgesehen sind.

3. Apochromatisches Objektiv nach Anspruch 1,
**dadurch gekennzeichnet,**
**dass** Linsen aus drei der in Anspruch 1 genannten Materialien vorgesehen sind.

4. Apochromatisches Objektiv nach einem der vorhergehenden Ansprüche,
**dadurch gekennzeichnet,**
**dass** der Gehalt von Ceroxid (CeO₂) mindestens 0,5 Gewichtsprozent, vorzugsweise zwischen 1,8 und 2,0 Gewichtsprozent, beträgt.

5. Apochromatisches Objektiv nach einem der vorhergehenden Ansprüche,
**dadurch gekennzeichnet,**
**dass** die Blende (4) zwischen der ersten Linsengruppe (1) und der zweiten Linsengruppe (2) vorgesehen ist.

6. Apochromatisches Objektiv nach einem der vorhergehenden Ansprüche,
**dadurch gekennzeichnet,**
**dass** zumindest zwei Linsen jeweils eine asphärische Oberfläche aufweisen.

7. Apochromatisches Objektiv nach Anspruch 6,
**dadurch gekennzeichnet,**
**dass** drei Linsen jeweils eine asphärische Oberfläche aufweisen.

8. Apochromatisches Objektiv nach Anspruch 6 oder 7,
**dadurch gekennzeichnet,**
**dass** zumindest eine asphärische Oberfläche in Richtung der optischen Achse (X) vor der Blende (4) und zumindest eine asphärische Oberfläche in Richtung der optischen Achse (X) hinter der Blende (4) vorgesehen ist.

9. Apochromatisches Objektiv nach einem der Ansprüche 6 bis 8,
**dadurch gekennzeichnet,**
**dass** eine der Linsenoberflächen der Linsen (L4, L5, L6) der zweiten Linsengruppe (2) asphärisch ausgebildet ist.

10. Apochromatisches Objektiv nach Anspruch 9,
**dadurch gekennzeichnet,**
**dass** eine der Linsenoberflächen (11, 12) der zur Gegenstandebene (6) weisenden Linse (L1) in der ersten Linsengruppe (1) asphärisch ausgebildet ist.

11. Apochromatisches Objektiv nach Anspruch 9,
**dadurch gekennzeichnet,**
**dass** eine der Linsenoberflächen (33, 34) der zur Bildebene (5) weisenden Linse (L8) in der dritten Linsengruppe (3) asphärisch ausgebildet ist.

12. Apochromatisches Objektiv nach Anspruch 9,
**dadurch gekennzeichnet,**
**dass** eine der Linsenoberflächen (11, 12) der zur Gegenstandebene (6) weisenden Linse (L1) in der ersten Linsengruppe (1) asphärisch ausgebildet ist und
**dass** eine der Linsenoberflächen (33, 34) der zur Bildebene (5) weisenden Linse (L8) in der dritten Linsengruppe (3) asphärisch ausgebildet ist.

## Claims

1. An apochromatic lens, comprising
- an aperture (4) and
- exclusively refractive optical elements, comprising a plurality of lenses (L1, L2, L3, L4, L5, L6, L7, L8) arranged in lens groups (1, 2, 3) along an optical axis (X),
- wherein lenses made of different materials are provided and
- wherein each of the lenses (L1, L2, L3, L4, L5, L6, L7, L8) is made of one of the following materials
calcium fluoride (CaF₂),
synthetic quartz (SiO₂), or
another optical material (SR) which is resistant against shortwave electromagnetic radiation or particle radiation,
- wherein at least one of the lenses (L1, L2, L3, L4, L5, L6, L7, L8) is made of another radiation resistant optical material (SR) than CaF₂ or SiO₂,
**characterized in that**
the lens is apochromatically corrected for a wavelength range from 400nm to 1000nm, and
the other radiation resistant optical material (SR) comprises cerium oxide (CeO₂).

2. The apochromatic lens according to claim 1,
**characterized in that** lenses made of two of the materials according to claim 1 are provided.

3. The apochromatic lens according to claim 1,
**characterized in that** that lenses made of three of the materials according to claim 1 are provided.

4. The apochromatic lens according to anyone of the preceding claims,
**characterized in that** the content of cerium oxide (CeO₂) is at least 0.5 weight percent, preferably between 1.8 and 2.0 weight percent.

5. The apochromatic lens according to anyone of the preceding claims,
**characterized in that** the aperture (4) is provided between the first lens group (1) and the second lens group (2).

6. The apochromatic lens according to anyone of the preceding claims,
**characterized in that** at least two lenses have an aspherical surface.

7. The apochromatic lens according to claim 6,
**characterized in that** three lenses have an aspherical surface.

8. The apochromatic lens according to claim 6 or 7,
**characterized in that** at least one aspherical surface is provided in front of the aperture (4) in the direction of the optical axis (X) and at least one aspherical surface is provided behind the aperture (4) in the direction of the optical axis (X).

9. The apochromatic lens according to anyone of claims 6 to 8,
**characterized in that** one of the lens surfaces of the lenses (L4, L5, L6) of the second lens group (2) is formed aspherically.

10. The apochromatic lens according to claim 9,
**characterized in that** one of the lens surfaces (11, 12) of the lens (L1) facing towards an object plane (6) in the first lens group (1) is formed aspherically.

11. The apochromatic lens according to claim 9,
**characterized in that** one of the lens surfaces (33, 34) of the lens (L8) facing towards an image plane (5) in the third lens group (3) is formed aspherically.

12. The apochromatic lens according to claim 9,
**characterized in that** one of the lens surfaces (11, 12) of the lens (L1) facing towards an object plane (6) in the first lens group (1) is formed aspherically and
one of the lens surfaces (33, 34) of the lens (L8) facing towards an image plane (5) in the third lens group (3) is formed aspherically.

## Revendications

1. Objectif apochromatique, comprenant
- un diaphragme (4) et
- des éléments optiques exclusivement réfractifs, comprenant une pluralité de lentilles (L1, L2, L3, L4, L5, L6, L7, L8) disposés en groupes de lentilles (1, 2, 3) le long d'un axe optique (X),
- des lentilles de matériaux différents étant prévues et
- les lentilles (L1, L2, L3, L4, L5, L6, L7, L8) étant respectivement constituées de l'un des matériaux suivants :
▪ fluorure de calcium (CaF₂),
▪ quartz synthétique (SiO₂) ou
▪ autre matériau optique (SR) résistant au rayonnement électromagnétique de courte longueur d'onde ou au rayonnement de particules,
- au moins une des lentilles (L1, L2, L3, L4, L5, L6, L7, L8) étant constituée d'un autre matériau optique résistant au rayonnement (SR) que CaF₂ ou SiO₂, **caractérisé en ce que**
l'objectif est corrigé apochromatiquement pour une gamme de longueurs d'onde de 400 nm à 1 000 nm, et **en ce que**
l'autre matériau optique résistant au rayonnement (SR) présente de l'oxyde de cérium (CeO₂) comme constituant.

2. Objectif apochromatique selon la revendication 1,
**caractérisé en ce que**
des lentilles composées de deux des matériaux mentionnés dans la revendication 1 sont prévues.

3. Objectif apochromatique selon la revendication 1,
**caractérisé en ce que**
des lentilles composées de trois des matériaux mentionnés dans la revendication 1 sont prévues.

4. Objectif apochromatique selon l'une des revendications précédentes,
**caractérisé en ce que**
la teneur en oxyde de cérium (CeO₂) est d'au moins 0,5 pour cent en poids, de préférence comprise entre 1,8 et 2,0 pour cent en poids.

5. Objectif apochromatique selon l'une des revendications précédentes,
**caractérisé en ce que**
le diaphragme (4) est prévu entre le premier groupe de lentilles (1) et le deuxième groupe de lentilles (2).

6. Objectif apochromatique selon l'une des revendications précédentes,
**caractérisé en ce que**
au moins deux lentilles présentent respectivement une surface asphérique.

7. Objectif apochromatique selon la revendication 6,
**caractérisé en ce que**
trois lentilles présentent respectivement une surface asphérique.

8. Objectif apochromatique selon la revendication 6 ou 7,
**caractérisé en ce que**
au moins une surface asphérique est prévue avant le diaphragme (4) dans la direction de l'axe optique (X) et au moins une surface asphérique est prévue après le diaphragme (4) dans la direction de l'axe optique (X).

9. Objectif apochromatique selon l'une des revendications 6 à 8,
**caractérisé en ce que**
une des surfaces de lentille des lentilles (L4, L5, L6) du deuxième groupe de lentilles (2) est asphérique.

10. Objectif apochromatique selon la revendication 9,
**caractérisé en ce que**
une des surfaces de lentille (11, 12) de la lentille (L1) tournée vers le plan objet (6) dans le premier groupe de lentilles (1) est asphérique.

11. Objectif apochromatique selon la revendication 9,
**caractérisé en ce que**
une des surfaces de lentille (33, 34) de la lentille (L8) tournée vers le plan image (5) dans le troisième groupe de lentilles (3) est asphérique.

12. Objectif apochromatique selon la revendication 9,
**caractérisé en ce que**
une des surfaces de lentille (11, 12) de la lentille (L1) tournée vers le plan objet (6) dans le premier groupe de lentilles (1) est asphérique, et **en ce que**
une des surfaces de lentille (33, 34) de la lentille (L8) tournée vers le plan image (5) dans le troisième groupe de lentilles (3) est asphérique.
